# EUROPEAN PATENT APPLICATION

(11) **EP 4 807 849 A1**
(43) Date of publication of application: **16.09.2026**
(21) Application number: 24896090.8
(22) Date of filing: 22.10.2024
(51) Int. Cl.: H01M 10/0567, H01M 10/0525

(54) **ELECTROLYTE AND USE THEREOF**

(30) Priority: 30.11.2023 CN 202311626975
(71) Applicant: Guangzhou Tinci Materials Technology Co., Ltd, Guangzhou, Guangdong 510700 (CN); Jiujiang Tinci Materials Technology Co., Ltd., Jiujiang, Jiangxi 332500 (CN)
(72) Inventor: WANG, Wenlian, Guangzhou, Guangdong 510700 (CN); FAN, Chaojun, Guangzhou, Guangdong 510700 (CN); FAN, Weizhen, Guangzhou, Guangdong 510700 (CN); SHI, Litao, Guangzhou, Guangdong 510700 (CN)
(74) Representative: Bals & Vogel Patentanwälte PartGmbB
(86) International application number: PCT/CN2024/126568
(87) International publication number: WO 2025/112998

(57) **Abstract**

The present application provides an electrolyte and a use thereof. The electrolyte comprises fluoroethylene carbonate and a boric acid ester compound. The electrolyte is used in a battery, and can facilitate the formation of a high-quality SEI film on the surface of a negative electrode, and effectively inhibits the side reaction of a silicon-based battery, so that the battery impedance is reduced, and the high-temperature cycle and the high-temperature storage performance of the battery are improved.

## Description

The application claims priority to the Chinese Patent Application No. 202311626975.0, titled "ELECTROLYTE AND USE THEREOF", and filed with China National Intellectual Property Administration on November 30, 2023, the entire disclosure of which is incorporated herein by reference.

### FIELD

The present disclosure relates to an electrolyte and use thereof, and belongs to the technical field of energy.

### BACKGROUND

With scientific and technological progress and the diversification of energy demand, the depletion of traditional energy sources is accelerating, prompting countries to step up their strategic deployment of new energy technologies. Power batteries are rising rapidly alongside the development of new energy vehicles, and energy storage batteries are also gaining momentum with the expansion of clean energy. Since 2017, competition in the new energy vehicle industry has intensified. Various power battery manufacturers continuously develop and update their products in a quest to identify a chemical power system that can better adapt to the market. This is aimed at meeting user demands for high specific energy and extended range, with the ultimate goal of comprehensively replacing traditional fuel-powered passenger cars and buses.

Lithium-ion batteries are one of the key products in new energy technologies. Traditional lithium-ion batteries use graphite to prepare a negative electrode sheet. However, the graphite has a specific capacity of 372 mAh g⁻¹, making it difficult to meet demands for higher specific energy in lithium-ion batteries. Consequently, researchers both domestically and internationally have increasingly turned their attention to a silicon-based negative electrode material with a high specific capacity. Although the silicon-based negative electrode material can improve an energy density of the battery to some extent, the silicon-based negative electrode material is prone to significant volume expansion during battery cycling. This leads to continuous damage to an interfacial film between the negative electrode sheet and the electrolyte, causing sustained decomposition of the electrolyte and ultimately resulting in a deterioration of battery performance.

In order to address a problem of battery performance degradation caused by damage to the interfacial film between the negative electrode sheet and the electrolyte during cycling of a battery containing the silicon-based negative electrode material, researchers have proposed developing a novel electrolyte additive to construct a stable interfacial film on a surface of the negative electrode sheet, thereby mitigating a negative effect resulting from expansion of the silicon-based negative electrode material. For example, fluoroethylene carbonate (FEC) is used as an electrolyte additive and added to the electrolyte, to form a stable interfacial film on the surface of the negative electrode sheet. In this way, a capacity loss caused by the silicon-based negative electrode material is effectively reduced. Moreover, interface impedance between the negative electrode sheet and the electrolyte is reduced. However, FEC tends to generate gas at a high temperature, leading to battery failure or even explosion.

### SUMMARY

The present disclosure provides an electrolyte. The electrolyte is used in a battery, which facilitates the formation of a high-quality SEI film on a surface of a negative electrode and effectively inhibits a side reaction of a silicon-based battery. In this way, battery impedance is reduced, and high-temperature cycling and high-temperature storage performance of the battery are improved.

The present disclosure further provides a battery including the above electrolyte. Therefore, the battery exhibits superior electrochemical performance.

The present disclosure provides an electrolyte. The electrolyte includes fluoroethylene carbonate and a borate ester compound.

In the electrolyte as described above, the borate ester compound has a structural formula represented by any one of Formula 1 to Formula 4: 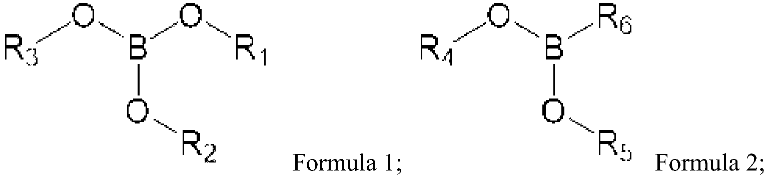 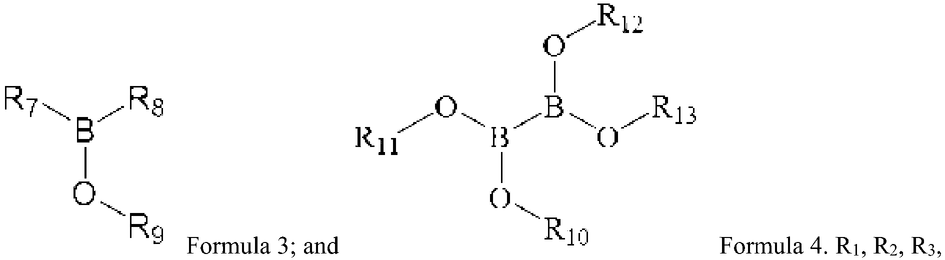 R₆, R₇, R₈, R₉, R₁₀, R₁₁, R₁₂, and R₁₃ in Formula 1 to Formula 4 are each independently selected from substituted or unsubstituted C₁ to C₃₀ alkyl, substituted or unsubstituted C₂ to C₃₀ alkenyl, or substituted or unsubstituted C₁ to C₃₀ silyl. R₄ and R₅ in Formula 2 are each independently selected from substituted or unsubstituted C₁ to C₃₀ alkyl, substituted or unsubstituted C₂ to C₃₀ alkenyl, or substituted or unsubstituted C₁ to C₃₀ silyl; and/or R₄ and R₅ are bonded to form a ring.

In the electrolyte as described above, a substituent of R₁, R₂, R₃, R₄, R₅, R₆, R₇, R₈, R₉, R₁₀, R₁₁, R₁₂, and R₁₃ is selected from at least one of substituted or unsubstituted C₁ to C₃₀ alkyl, substituted or unsubstituted C₂ to C₃₀ alkenyl, carbonyl, or halogen.

In the electrolyte as described above, the borate ester compound is selected from the following compounds: 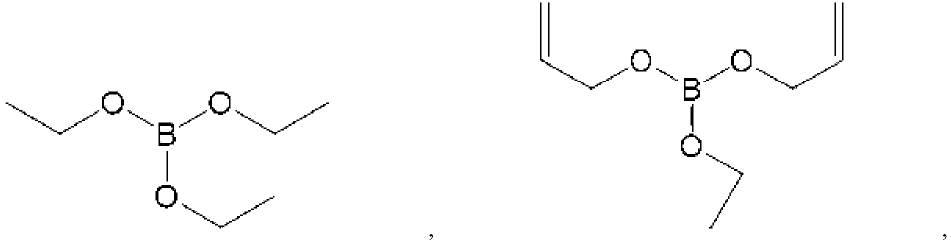 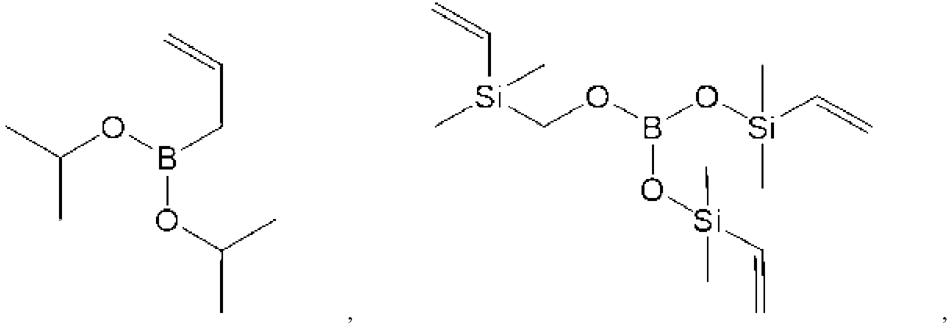 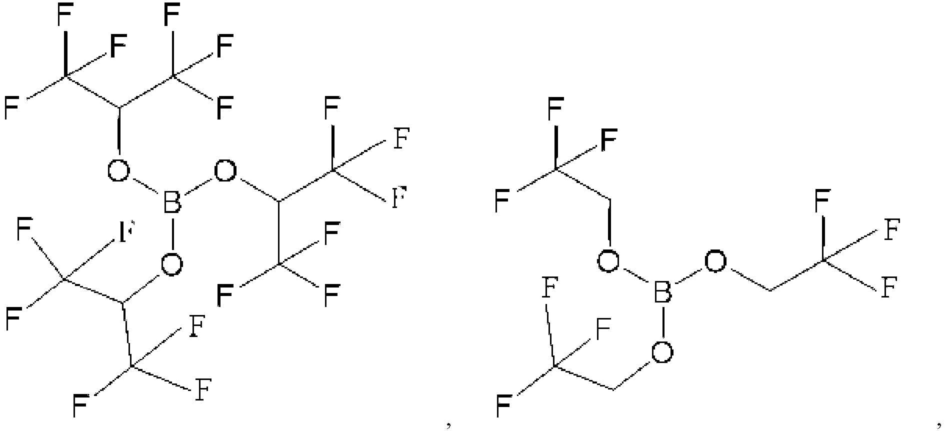 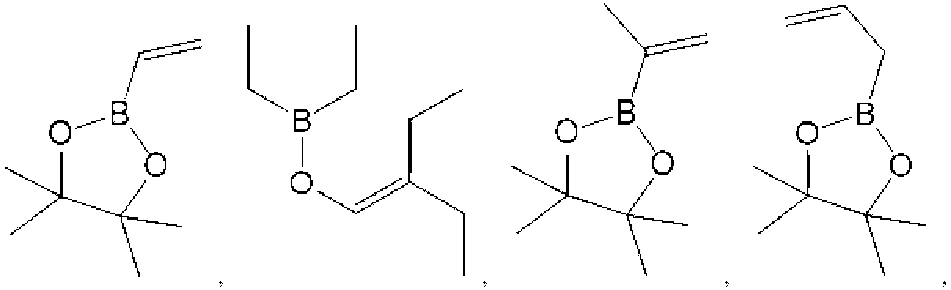 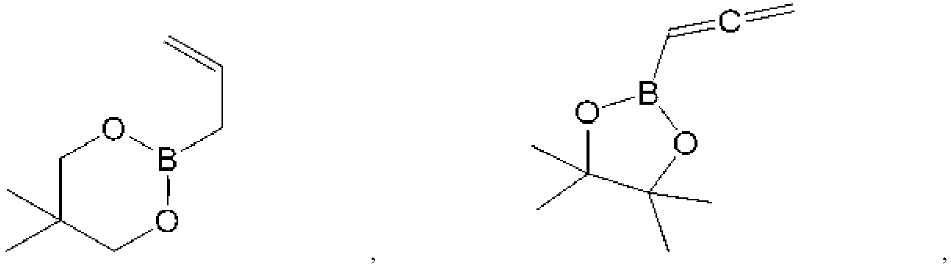 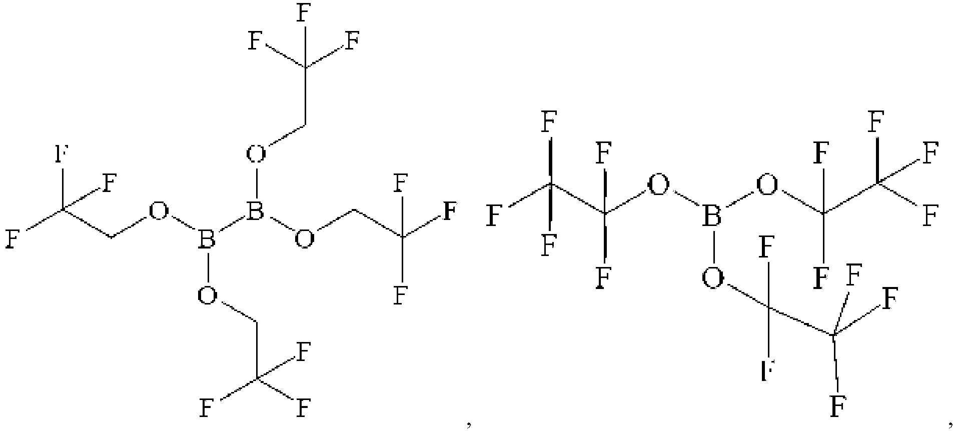 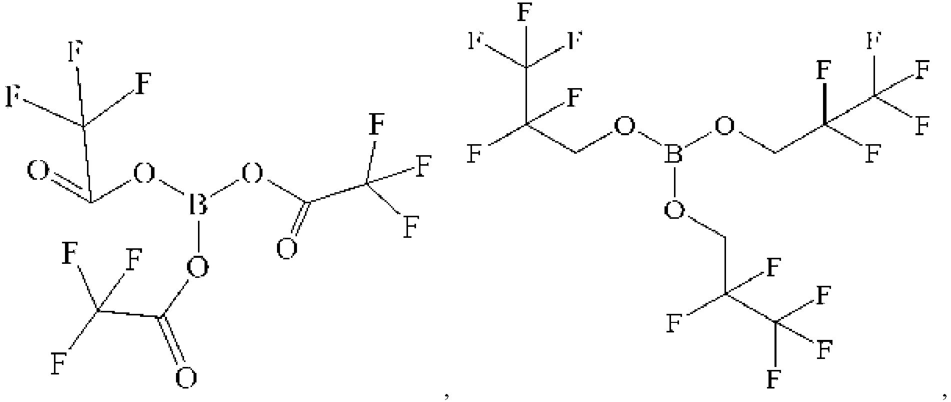 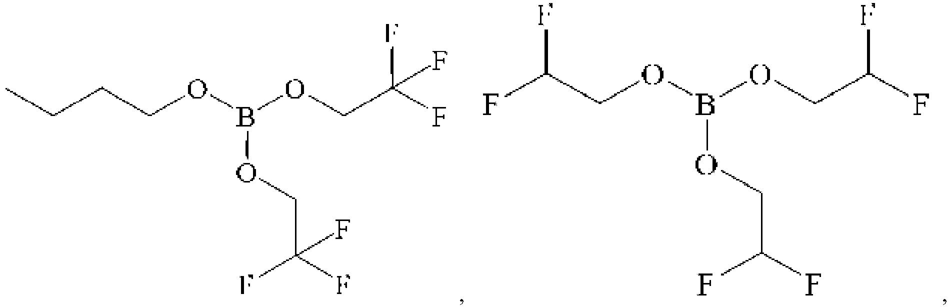 or

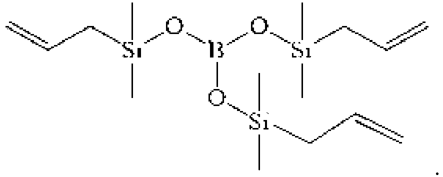

In the electrolyte as described above, based on a total mass of the electrolyte, a mass percentage of the borate ester compound ranges from 0.1% to 2%.

In the electrolyte as described above, based on a total mass of the electrolyte, a mass percentage of the fluoroethylene carbonate ranges from 1% to 15%.

In the electrolyte as described above, based on the total mass of the electrolyte, the mass percentage of the borate ester compound ranges from 0.1% to 1%, and a mass percentage of the fluoroethylene carbonate ranges from 5% to 10%.

The electrolyte as described above further includes: a solvent and/or other additives. Based on a total mass of the electrolyte, a mass percentage of the solvent ranges from 10% to 80%. Based on a total mass of the electrolyte, a mass percentage of the other additives ranges from 0.5% to 5%. The other additives are selected from at least one of vinylene carbonate, vinyl ethylene carbonate, ethylene sulfate, 1,3-propane sultone, 1,3-propene sultone, ethylene sulfite, or tris(trimethylsilyl)borate.

The electrolyte as described above further includes a lithium salt. Based on a total mass of the electrolyte, a mass percentage of the lithium salt ranges from 12% to 18%.

The present disclosure provides a battery including the electrolyte as described above.

The electrolyte of the present disclosure has a simple composition. The electrolyte is used in a battery, such as a secondary battery, which facilitates the formation of a denser and more stable SEI film on a surface of a negative electrode of the secondary battery, thereby protecting the electrode. Further, it is beneficial to an improvement in performance of the secondary battery.

Since the battery of the present disclosure includes the aforementioned electrolyte, a dense and stable SEI film is formed on the surface of the negative electrode. In this way, damage caused by contact between the electrode and the electrolyte can be further avoided. Therefore, an electrochemical device of the present disclosure exhibits superior electrochemical performance, such as excellent high-temperature cycling and high-temperature storage performance.

### DETAILED DESCRIPTION

In order to make the purpose, technical solutions, and advantages of the present disclosure clearer, technical solutions in embodiments of the present disclosure are clearly and thoroughly described below in combination with the embodiments of the present disclosure. Obviously, the described embodiments are merely a part of the embodiments of the present disclosure, rather than all embodiments of the present disclosure. Based on the embodiments of the present disclosure, other embodiments obtained by those skilled in the art without creative labor are within the scope of the present disclosure.

In a first aspect, the present disclosure provides an electrolyte including fluoroethylene carbonate (FEC) and a borate ester compound.

When the electrolyte including the fluoroethylene carbonate and the borate ester compound according to the present disclosure is applied to a battery, electrochemical performance of the battery can be significantly improved. The inventors have analyzed this phenomenon and believe the reason may be as follows. A boron atom in the borate ester compound is an electron-deficient atom, which can effectively complex free fluoride ions generated from decomposition of FEC in an electrolyte system. In this way, a pathway for FEC to undergo a side reaction is cut off. Further, gas generation is effectively suppressed. Meanwhile, borate ester in the borate ester compound can react with a trace amount of lithium salts in the electrolyte to form a low-impedance component that participates in the construction of an electrode/electrolyte interfacial film. As a result, a diffusion energy barrier of lithium ions is reduced. Lithium ions can rapidly intercalate/deintercalate, which reduces the formation of lithium dendrites and improves a cycle life of a lithium-ion battery. Moreover, the low-impedance interfacial film facilitates the rapid deintercalation of the lithium ions and can also improve low-temperature performance of the battery. It is worth noting that the boron atom is a common central atom capable of linking various effective groups in the electrolyte. In this way, a film-forming effect of FEC is further enhanced, thereby improving the electrochemical performance of the battery.

In some embodiments of the present disclosure, the borate ester compound has a structural formula represented by any one of Formula 1 to Formula 4:

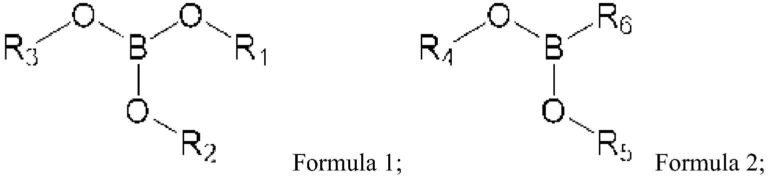

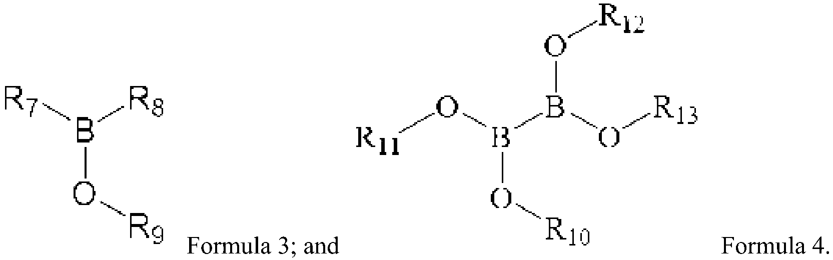

R₁, R₂, R₃, R₆, R₇, R₈, R₉, R₁₀, R₁₁, R₁₂, and R₁₃ in Formula 1 to Formula 4 are each independently selected from substituted or unsubstituted C₁ to C₃₀ alkyl, substituted or unsubstituted C₂ to C₃₀ alkenyl, or substituted or unsubstituted C₁ to C₃₀ silyl.

R₄ and R₅ in Formula 2 are each independently selected from substituted or unsubstituted C₁ to C₃₀ alkyl, substituted or unsubstituted C₂ to C₃₀ alkenyl, or substituted or unsubstituted C₁ to C₃₀ silyl; and/or R₄ and R₅ are bonded to form a ring.

In an embodiment of the present disclosure, R₁, R₂, R₃, R₆, R₇, R₈, R₉, R₁₀, R₁₁, R₁₂, and R₁₃ in Formula 1 to Formula 4 are each independently selected from substituted or unsubstituted C₁ to C₃₀ alkyl (for example, may be substituted linear alkyl, substituted branched alkyl, substituted cycloalkyl, unsubstituted linear alkyl, unsubstituted branched alkyl, or unsubstituted cycloalkyl), substituted or unsubstituted C₂ to C₃₀ alkenyl (for example, may be substituted branched alkenyl, substituted linear alkenyl, substituted cycloalkenyl, unsubstituted linear alkenyl, unsubstituted branched alkenyl, or unsubstituted cycloalkenyl), or substituted or unsubstituted C₁ to C₃₀ silyl (for example, may be substituted branched silyl, substituted linear silyl, substituted cyclic silyl, unsubstituted branched silyl, unsubstituted linear silyl, or unsubstituted cyclic silyl).

R₄ and R₅ in Formula 2 are each independently selected from substituted or unsubstituted C₁ to C₃₀ alkyl (for example, may be substituted linear alkyl, substituted branched alkyl, substituted cycloalkyl, unsubstituted linear alkyl, unsubstituted branched alkyl, or unsubstituted cycloalkyl), substituted or unsubstituted C₂ to C₃₀ alkenyl (for example, may be substituted branched alkenyl, substituted linear alkenyl, substituted cycloalkenyl, unsubstituted linear alkenyl, unsubstituted branched alkenyl, or unsubstituted cycloalkenyl), or substituted or unsubstituted C₁ to C₃₀ silyl (for example, may be substituted branched silyl, substituted linear silyl, substituted cyclic silyl, unsubstituted branched silyl, unsubstituted linear silyl, or unsubstituted cyclic silyl).

Alternatively, R₄ and R₅ are bonded to form a ring.

Alternatively, R₄ and R₅ form a cyclic structure by linking any two of the above groups.

A substituent of R₁, R₂, R₃, R₄, R₅, R₆, R₇, R₈, R₉, R₁₀, R₁₁, R₁₂, and R₁₃ is not specifically limited in the present disclosure, and may be a conventional substituent in the art. Exemplarily, the substituent may be at least one of substituted or unsubstituted C₁ to C₃₀ alkyl, substituted or unsubstituted C₂ to C₃₀ alkenyl, carbonyl, halogen, substituted or unsubstituted C₆ to C₆₀ aryl, amino, an ester group, or cyano.

The inventors have found in the research that when the borate ester compound has the above structure, the electrochemical performance of the battery can be further improved. In particular, when the borate ester compound contains silyl, the silyl can further remove a trace amount of water in the electrolyte and enhance the ability to cut off a side reaction. Further, when the borate ester compound contains silyl with an unsaturated bond (such as silyl substituted with an unsaturated bond), the potential for the electrolyte to form a film via polymerization can be enhanced. When the borate ester compound contains a Si-O bond, a high-temperature resistance capability of the interfacial film can be further improved, ultimately enhancing high-temperature performance of the battery.

When the borate ester compound contains an unsaturated bond (such as substituted or unsubstituted alkenyl), a film-forming capability of the borate ester compound can be improved, enabling the borate ester compound to directly participate in the construction of the interfacial film. A central atom B of the borate ester compound can attach to an electrode surface, to better complex free F ions in the electrolyte. In this way, an attack of HF on the interfacial film and a battery material is reduced, and the electrochemical performance of the battery is improved.

When the borate ester compound contains a fluoroalkyl group, a C-F bond in the fluoroalkyl group exhibits excellent stability. Highly reactive fluoride ions are unlikely to form in the electrolyte, which can avoid a side reaction caused by the fluoride ions. Meanwhile, the fluoroalkyl group has extremely high stability and can be regarded as an excellent inert component. When the borate ester compound participates in the construction of the interfacial film, the fluoroalkyl group can be embedded into the interfacial film. In this way, inertness of the interfacial film is improved, and reactive sites of the interfacial film are reduced. Further, stability of the interfacial film is enhanced.

Compared with Formula 1 to Formula 3, a diboron structure of Formula 4 has two central boron atoms, which can exhibit a better fluoride ion adsorption function, thereby further reducing a negative effect caused by the fluoride ions. In addition, the diboron structure can carry more functional groups, facilitating its participation in the construction of the interfacial film.

In some embodiments of the present disclosure, the substituent of R₁, R₂, R₃, R₄, R₅, R₆, R₇, R₈, R₉, R₁₀, R₁₁, R₁₂, and R₁₃ can be further selected to further improve electrochemical performance of the electrolyte and electrochemical performance of the battery. For example, the substituent of R₁, R₂, R₃, R₄, R₅, R₆, R₇, R₈, R₉, R₁₀, R₁₁, R₁₂, and R₁₃ is selected from at least one of substituted or unsubstituted C₁ to C₃₀ alkyl (for example, may be substituted linear alkyl, substituted branched alkyl, substituted cycloalkyl, unsubstituted linear alkyl, unsubstituted branched alkyl, or unsubstituted cycloalkyl), substituted or unsubstituted C₂ to C₃₀ alkenyl (for example, may be substituted branched alkenyl, substituted linear alkenyl, substituted cycloalkenyl, unsubstituted linear alkenyl, unsubstituted branched alkenyl, or unsubstituted cycloalkenyl), carbonyl, or halogen (such as F, Cl, Br, or I).

Exemplarily, the borate ester compound is selected from the following compounds: 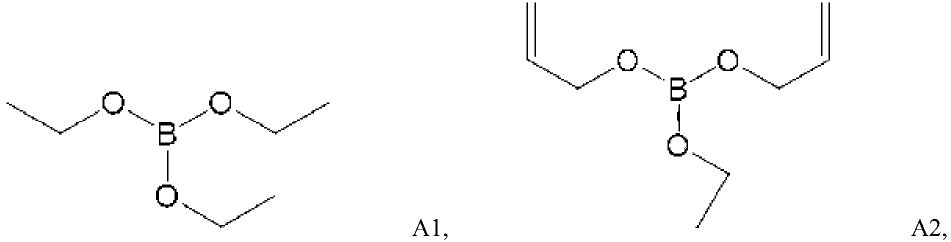 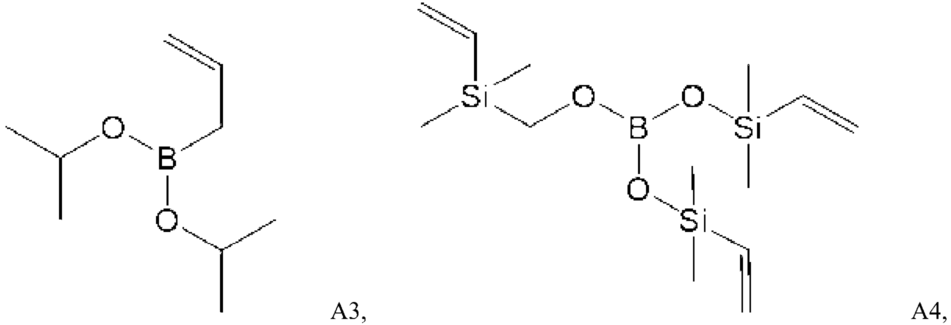 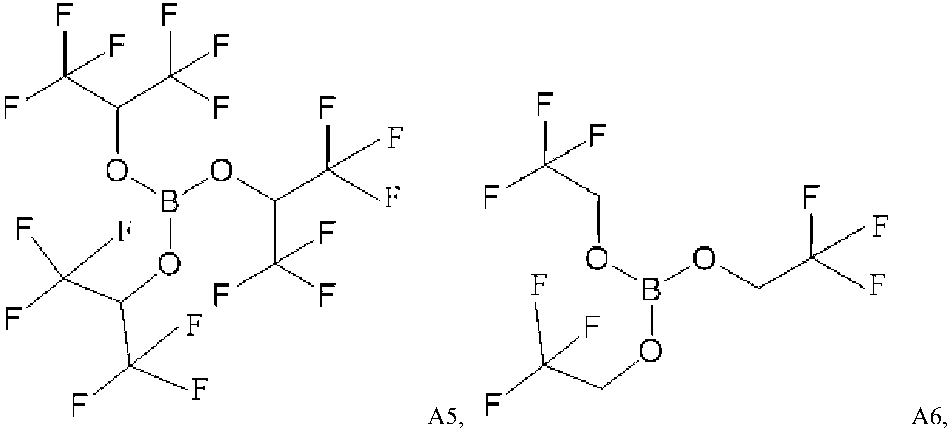 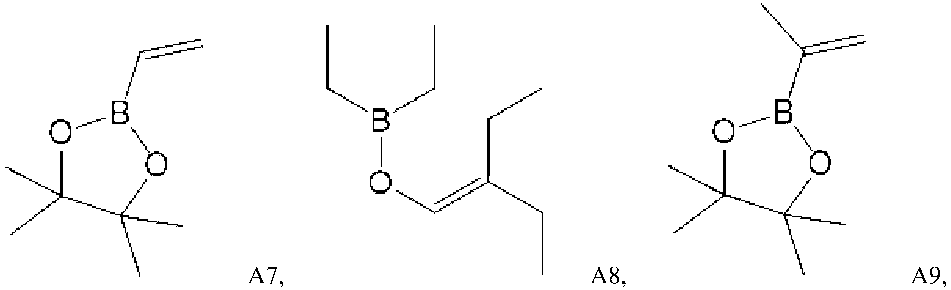 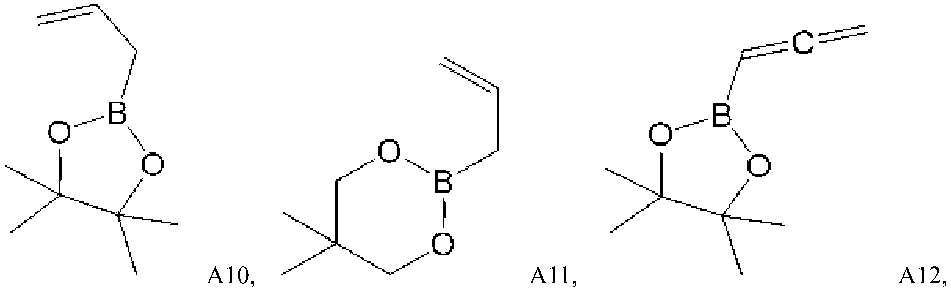 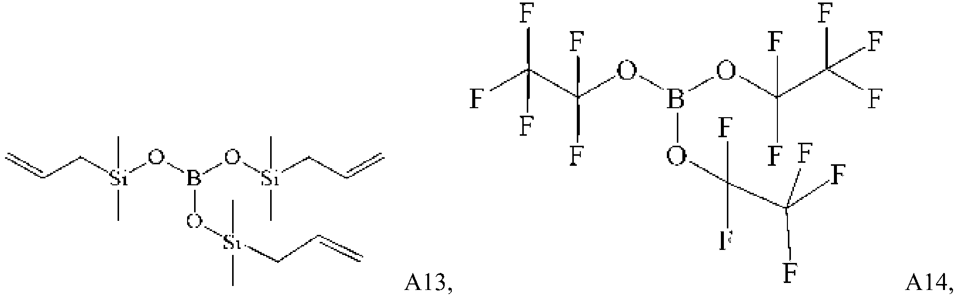 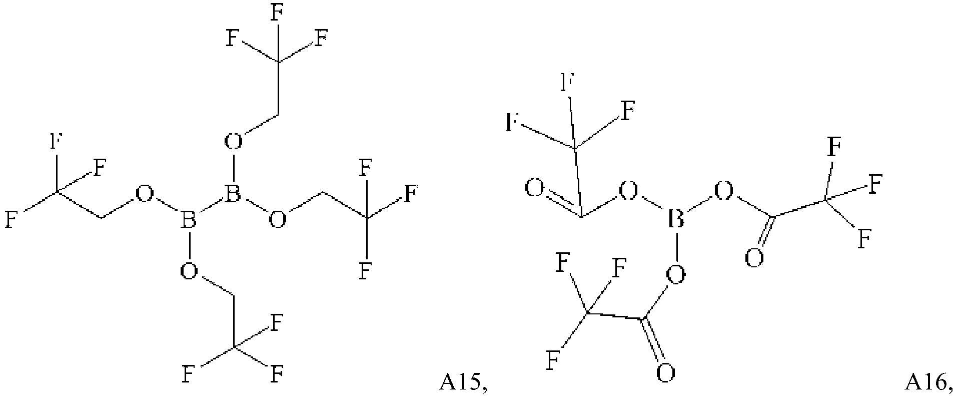 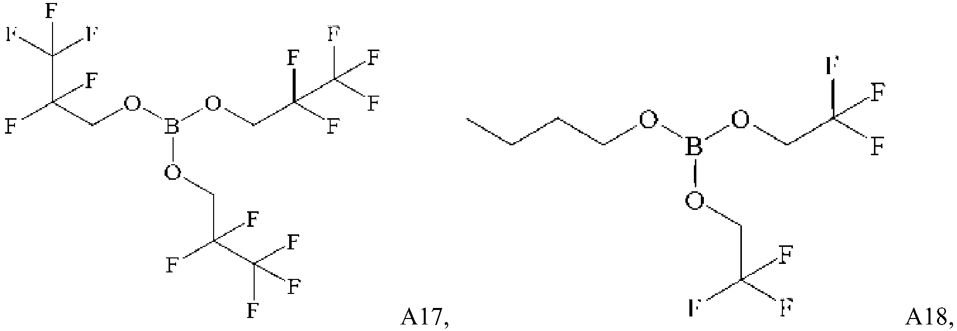 or

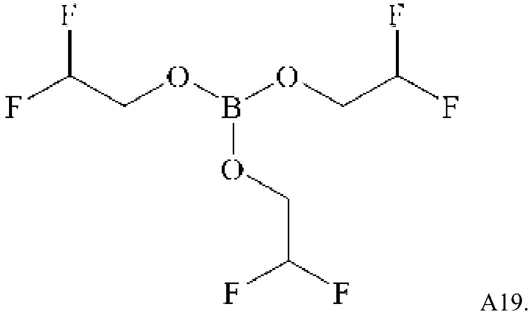

It can be understood that contents of the borate ester compound and the fluoroethylene carbonate in the electrolyte have a crucial influence on the performance of the electrolyte. Therefore, the present disclosure can further select the contents of the borate ester compound and the fluoroethylene carbonate in the electrolyte to improve overall performance of the electrolyte. Exemplarily, based on a total mass of the electrolyte, a mass percentage of the borate ester compound ranges from 0.1% to 2%; and/or based on the total mass of the electrolyte, a mass percentage of the fluoroethylene carbonate ranges from 1% to 15%.

The inventors have further found in the research that when, based on the total mass of the electrolyte, the mass percentage of the borate ester compound ranges from 0.1% to 1% and the mass percentage of the fluoroethylene carbonate ranges from 5% to 10%, the borate ester compound can better match with the fluoroethylene carbonate. In this way, the overall performance of the electrolyte is further improved. Further, overall performance of the battery is improved.

In some embodiments of the present disclosure, the electrolyte further includes a solvent. Based on a total mass of the electrolyte, a mass percentage of the solvent ranges from 10% to 80%.

The solvent is not specifically limited in the present disclosure, and may be a conventional solvent in the art. Exemplarily, the solvent may be at least one of propylene carbonate, ethyl methyl carbonate, ethylene carbonate, dimethyl carbonate, diethyl carbonate, fluoroethylene carbonate, γ-butyrolactone, sulfolane, methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, or butyl butyrate.

The electrolyte further includes other additives. Based on the total mass of the electrolyte, a mass percentage of the other additives ranges from 0.5% to 5%.

The other additives are not specifically limited in the present disclosure, and may be conventional electrolyte additives in the art. Exemplarily, the electrolyte additive may be at least one of vinylene carbonate (VC), vinyl ethylene carbonate (VEC), ethylene sulfate (DTD), 1,3-propane sultone (PS), 1,3-propene sultone (PST), ethylene sulfite (ES), or tris(trimethylsilyl)borate (TMSB).

When the electrolyte further includes the solvent in the above specific content and/or the other additives in the above specific content, the overall performance of the electrolyte can be further improved, thereby enhancing the overall performance of the battery.

In some embodiments of the present disclosure, the electrolyte further includes a lithium salt. Based on a total mass of the electrolyte, a mass percentage of the lithium salt ranges from 12% to 18%. Further, the mass percentage of the lithium salt is greater than 12.5%.

The lithium salt is not specifically limited in the present disclosure, and may be a conventional lithium salt in the art. Exemplarily, the lithium salt may be at least one of lithium hexafluorophosphate, lithium difluorophosphate, lithium tetrafluoroborate, lithium hexafluoroarsenate, lithium perchlorate, lithium bis(fluorosulfonyl)imide, lithium bis(trifluoromethanesulfonyl)imide, lithium bis(oxalato) borate, or lithium difluorooxalato borate.

It can be understood that the lithium salt is an important component in the electrolyte. By further limiting the content of the lithium salt in the electrolyte in the present disclosure, an effect of the lithium salt can be fully exerted, and the overall performance of the electrolyte can be improved. Further, the overall performance of the battery is improved.

In a second aspect, the present disclosure provides a battery including the electrolyte of the first aspect.

It can be understood that the battery of the present disclosure further includes a positive electrode sheet, a negative electrode sheet, a separator, and an outer package.

The positive electrode sheet is not specifically limited in the present disclosure, and may be a common positive electrode sheet in the art. In some embodiments, a positive electrode active material in the positive electrode sheet may be at least one of lithium cobalt oxide, lithium iron phosphate, or a ternary material. Further, a molar percentage of element Ni or Mn in the positive electrode active material is greater than 65%. A compaction density of a positive electrode active layer of the positive electrode sheet may range from 1 g/cm³ to 5 g/cm³.

The negative electrode sheet is not specifically limited in the present disclosure, and may be a common negative electrode sheet in the art. In some embodiments, a negative electrode active material in the negative electrode sheet may be selected from at least one of artificial graphite, natural graphite, lithium titanate, silicon, silicon carbon, silicon oxide, or a silicon-metal compound. Further, the negative electrode active material may be silicon carbon and/or silicon oxide. A compaction density of a negative electrode active layer of the negative electrode sheet may range from 1 g/cm³ to 4 g/cm³.

In a specific application, the electrolyte can form a stable SEI film on the surface of the negative electrode, and the electrolyte is not prone to gas generation at high temperature. Therefore, the battery including the electrolyte of the present disclosure can exhibit excellent room-temperature cycling performance, high-temperature cycling performance, and high-temperature storage performance.

Hereinafter, the electrolyte of the present disclosure and use thereof will be described in detail with reference to specific examples.

### Example 1

A battery of Example 1 was prepared by a method including the following steps.

### (1) Preparation of the positive electrode sheet

A positive electrode active material NCM811, a binder polyvinylidene fluoride (PVDF), and a conductive agent acetylene black were mixed in a mass ratio of 96.5:2:1.5, N-methylpyrrolidone (NMP) was added thereto, and the mixture was stirred under the action of a vacuum mixer until the raw materials were blended into a uniform and flowable positive electrode slurry.

The positive electrode slurry was uniformly coated on both surfaces of an aluminum foil with a thickness of 7 µm, baked in an oven with five distinct temperature gradients, and further dried in the oven at 120°C for 8 hours. Followed by rolling, controlling a compaction density of a positive electrode active layer to 3.5 g/cm³, and slitting, a positive electrode sheet was obtained.

### (2) Preparation of the negative electrode sheet

Negative electrode active material (carbon-silicon material @ graphite, with a mass percentage of 10% of the carbon-silicon material), a thickener sodium carboxymethyl cellulose (CMC-Na), a binder styrene-butadiene rubber, a conductive agent acetylene black, and a conductive agent single-walled carbon nanotube (SWCNT) were mixed in a mass ratio of 95.9:1:2:1:0.1, deionized water was added thereto, and the mixture was stirred under the action of the vacuum mixer to obtain a negative electrode slurry.

The negative electrode slurry was uniformly coated on both surfaces of a copper foil with a thickness of 6 µm and dried at 85°C for 5 hours. Followed by rolling, controlling a compaction density of a negative active layer to 1.65 g/cm³, and die-cutting, a negative electrode sheet was obtained.

### (3) Preparation of the electrolyte

In an argon-filled glove box (moisture<0.1 ppm, oxygen<1 ppm), ethylene carbonate (EC), diethyl carbonate (DEC), ethyl methyl carbonate (EMC), and propylene carbonate (PC) were uniformly mixed in a mass ratio of 1.5:1.5:5:2 to obtain a mixed solution. A thoroughly dried lithium salt, FEC, and a borate ester compound were quickly added to the mixed solution. Details are shown in Table 1.

### (4) Preparation of the lithium-ion battery

The positive electrode sheet of step (1), a separator, and the negative electrode sheet of step (2) were stacked in sequence and wound to obtain a bare cell without electrolyte injection.

The bare cell was placed in an outer packaging foil. The electrolyte of step (3) was injected into the dried bare cell. A desired lithium-ion battery was obtained through a series of processes including vacuum sealing, standing, formation, shaping, and sorting.

The separator was a coated polyethylene separator with a thickness of 8 µm.

### Examples 2 to 52 and Comparative Examples 1 and 2

The electrolyte compositions of Examples 2 to 52 were substantially the same as that of Example 1, with the differences listed in Table 1.

Lithium-ion batteries of Examples 2 to 52 and Comparative Examples 1 and 2 were obtained by replacing the electrolyte in Example 1 with the electrolytes of Examples 2 to 52 and Comparative Examples 1 and 2, respectively.

**[Table 1]**

| | Content of lithium salt | FEC/% | Content of borate ester compound | Other additives |
|---|---|---|---|---|
| Example 1 | LiPF₆:LiFSI:LiPO₂F₂=10%:4%:1% | 10% | A1:1% | / |
| Example 2 | LiPF₆:LiFSI:LiPO₂F₂=10%:4%:1% | 5% | A2:2% | / |
| Example 3 | LiPF₆:LiFSI:LiPO₂F₂=10%:4%:1% | 7% | A3:2% | / |
| Example 4 | LiPF₆:LiFSI:LiPO₂F₂=10%:4%:1% | 5% | A4:0.1% | / |
| Example 5 | LiPF₆:LiFSI:LiPO₂F₂=10%:4%:1% | 7% | A4:0.5% | / |
| Example 6 | LiPF₆:LiFSI:LiPO₂F₂=10%:4%:1% | 10% | A4:1% | / |
| Example 7 | LiPF₆:LiFSI:LiPO₂F₂=10%:4%:1% | 1% | A4:1.5% | / |
| Example 8 | LiPF₆:LiFSI:LiPO₂F₂=10%:4%:1% | 15% | A4:2% | / |
| Example 9 | LiPF₆:LiFSI:LiPO₂F₂=10%:4%:1% | 10% | A5:0.5% | / |
| Example 10 | LiPF₆:LiFSI:LiPO₂F₂=10%:4%:1% | 10% | A6:0.8% | / |
| Example 11 | LiPF₆:LiFSI:LiPO₂F₂=10%:4%:1% | 10% | A6:0.5% | / |
| Example 12 | LiPF₆:LiFSI:LiPO₂F₂=10%:4%:1% | 5% | A6:1.0% | / |
| Example 13 | LiPF₆:LiFSI:LiPO₂F₂=10%:4%:1% | 15% | A6:1.5% | / |
| Example 14 | LiPF₆:LiFSI:LiPO₂F₂=10%:4%:1% | 1% | A6:0.1% | / |
| Example 15 | LiPF₆:LiFSI:LiPO₂F₂=10%:4%:1% | 10% | A6:2% | / |
| Example 16 | LiPF₆:15% | 10% | A7:1% | / |
| Example 17 | LiPF₆:15% | 10% | A8:1% | / |
| Example 18 | LiPF₆:LiFSI:LiPO₂F₂=10%:4%:1% | 10% | A9:2% | / |
| Example 19 | LiPF₆:LiFSI:LiPO₂F₂=10%:4%:1% | 10% | A10:1% | / |
| Example 20 | LiPF₆:LiFSI:LiPO₂F₂=10%:4%:1% | 10% | A10:1.5% | / |
| Example 21 | LiPF₆:LiFSI:LiPO₂F₂=10%:4%:1% | 1% | A10:0.5% | / |
| Example 22 | LiPF₆:LiFSI:LiPO₂F₂=10%:4%:1% | 15% | A10:2% | / |
| Example 23 | LiPF₆:LiFSI:LiPO₂F₂=10%:4%:1% | 5% | A10:0.1% | / |
| Example 24 | LiPF₆:LiFSI:LiPO₂F₂=10%:4%:1% | 1% | A11:0.5% | / |
| Example 25 | LiPF₆:LiFSI:LiPO₂F₂=10%:4%:1% | 10% | A12:1% | / |
| Example 26 | LiPF₆:LiFSI:LiPO₂F₂=10%:4%:1% | 10% | A13:0.1% | / |
| Example 27 | LiPF₆:LiFSI:LiPO₂F₂=10%:4%:1% | 10% | A13:1% | / |
| Example 28 | LiPF₆:LiFSI:LiPO₂F₂=10%:4%:1% | 5% | A13:0.5% | / |
| Example 29 | LiPF₆:LiFSI:LiPO₂F₂=10%:4%:1% | 15% | A13:2% | / |
| Example 30 | LiPF₆:LiFSI:LiPO₂F₂=10%:4%:1% | 1% | A13:1.5% | / |
| Example 31 | LiPF₆:LiFSI:LiPO₂F₂=10%:4%:1% | 10% | A14:0.1 % | / |
| Example 32 | LiPF₆:LiFSI:LiPO₂F₂=10%:4%:1% | 1% | A14:1 % | / |
| Example 33 | LiPF₆:LiFSI:LiPO₂F₂=10%:4%:1% | 10% | A14:0.5 % | / |
| Example 34 | LiPF₆:LiFSI:LiPO₂F₂=10%:4%:1% | 15% | A14:1.5 % | / |
| Example 35 | LiPF₆:LiFSI:LiPO₂F₂=10%:4%:1% | 5% | A14:2 % | / |
| Example 36 | LiPF₆:LiFSI:LiPO₂F₂=10%:4%:1% | 10% | A15:0.1 % | / |
| Example 37 | LiPF₆:LiFSI:LiPO₂F₂=10%:4%:1% | 10% | A15: 1 % | / |
| Example 38 | LiPF₆:LiFSI:LiPO₂F₂=10%:4%:1% | 5% | A15: 0.5 % | / |
| Example 39 | LiPF₆:LiFSI:LiPO₂F₂=10%:4%:1% | 10% | A15:1.5 % | / |
| Example 40 | LiPF₆:LiFSI:LiPO₂F₂=10%:4%:1% | 1% | A15:2 % | / |
| Example 41 | LiPF₆:LiFSI:LiPO₂F₂=10%:4%:1% | 10% | A16:1 % | / |
| Example 42 | LiPF₆:LiFSI:LiPO₂F₂=10%:4%:1% | 10% | A17:0.1 % | / |
| Example 43 | LiPF₆:LiFSI:LiPO₂F₂=10%:4%:1% | 10% | A18:1.5 % | / |
| Example 44 | LiPF₆:LiFSI:LiPO₂F₂=10%:4%:1% | 10% | A15:2 % | / |
| Example 45 | LiPF₆:LiFSI:LiPO₂F₂=10%:4%:1% | 11% | A5:1% | / |
| Example 46 | LiPF₆:LiFSI:LiPO₂F₂=10%:4%:1% | 4% | A5:1% | / |
| Example 47 | LiPF₆:LiFSI:LiPO₂F₂=10%:4%:1% | 10% | A5:0.05% | / |
| Example 48 | LiPF₆:LiFSI:LiPO₂F₂=10%:4%:1% | 10% | A5:3.5% | / |
| Example 49 | LiPF₆:LiFSI:LiPO₂F₂=10%:4%:1% | 10% | A19:1% | / |
| Example 50 | LiPF₆:LiFSI:LiPO₂F₂=10%:4%:1% | 10% | A4:1% | VC:2% |
| Example 51 | LiPF₆:LiFSI:LiPO₂F₂=10%:4%:1% | 10% | A6:0.5% | DTD:0.5% |
| Example 52 | LiPF₆:LiFSI:LiPO₂F₂=10%:4%:1% | 10% | A10:0.1% | PS:1% |
| Example 53 | LiPF₆:LiFSI:LiPO₂F₂=10%:4%:1% | 10% | A4:0.1% | / |
| Example 54 | LiPF₆:LiFSI:LiPO₂F₂=10%:4%:1% | 10% | A4:2% | / |
| Example 55 | LiPF₆:LiFSI:LiPO₂F₂=10%:4%:1% | 10% | A4:0.05% | / |
| Example 56 | LiPF₆:LiFSI:LiPO₂F₂=10%:4%:1% | 10% | A4:3.5% | / |
| Example 57 | LiPF₆:LiFSI:LiPO₂F₂=10%:4%:1% | 18% | A4:1% | / |
| Example 58 | LiPF₆:LiFSI:LiPO₂F₂=10%:4%:1% | 0.5% | A4:1% | / |
| Comparative Example 1 | LiPF₆:15% | / | A5:1% | / |
| Comparative Example 2 | LiPF₆:15% | 10% | C:1% | / |
| Comparative | LiPF₆:LiFSI:LiPO₂F₂=10%:4%:1% | / | A4:1% | / |
| Example 3 | | | | |

In Table 1, Compound C has a structure represented by the following:

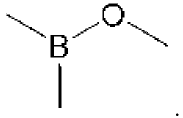

### Performance Test

The following performance tests were performed on the batteries in Examples and Comparative Examples. Test results are shown in Table 2.

### 1) Room-temperature cycling performance test

At a room temperature of 25°C, the battery was charged to 4.2 V at a constant current of 1C, and then charged to a cut-off current of 0.05C at a constant voltage of 4.2 V. Then, the battery was discharged at 1C to 2.75 V. The charge-discharge cycle was repeated for 600 cycles. A discharge capacity at the 600th cycle was recorded and divided by a discharge capacity at the first cycle to obtain a capacity retention rate.

### 2) High-temperature cycling performance test

At a high temperature of 45°C, the battery was charged to 4.2 V at a constant current of 1C, and then charged to a cut-off current of 0.05C at a constant voltage of 4.2 V. Then, the battery was discharged at 1C to 2.75 V. The charge-discharge cycle was repeated for 200 cycles. A discharge capacity at the 200th cycle was recorded and divided by the discharge capacity at the first cycle to obtain a capacity retention rate.

### 3) DCIR test

At the room temperature, the battery after capacity grading was charged to 4.2 V at 1C, and rested for 5 minutes. Then, the battery was discharged at 1C for 30 minutes, then rested for 1 hour, and discharged at 2C for 10 seconds. The DCIR of the battery at 50% SOC was calculated.

### 4) High-temperature storage performance test

At the room temperature of 25°C, the battery was charged to 4.2 V at a constant current of 1C, and then charged to a cut-off current of 0.05C at a constant voltage of 4.2 V. Then, the battery was discharged at a constant current of 0.5C, and the discharge capacity was recorded as C₁. At the room temperature of 25°C, the battery was charged to 4.2 V at a constant current of 1C, and then charged to a cut-off current of 0.05C at a constant voltage of 4.4 V. A thickness of the battery was measured and recorded as h1 (thickness of the battery before storage at 60°C). Then, the battery was transferred and placed at a high temperature of 60°C for 7 days. The thickness of the battery was measured again and recorded as h2 (thickness of the battery after storage at 60°C for 7 days). The battery was then discharged at a constant current of 0.5C, and the discharge capacity was recorded as C₂. A capacity retention rate at 60°C was calculated using the formula: capacity retention rate at 60°C=C₂/C₁*100%.

The DCIR of the battery after storage at 60°C for 7 days was tested using the method in 3).

**[Table 2]**

| | Capacity retention rate after 600 cycles at 25°C/% | Capacity retention rate after 200 cycles at 45°C/% | Capacity retention rate after storage at 60°C for 7 days/% | Thickness of battery before storage at 60°C/mm | Thickness of battery after storage at 60°C for 7 days/mm | Initial DCIR (mΩ) | DCIR after storage at 60°C for 7 days (mΩ) |
|---|---|---|---|---|---|---|---|
| Example 1 | 84.13 | 75.58 | 60.48 | 4.42 | 7.03 | 51.15 | 84.36 |
| Example 2 | 79.86 | 88.71 | 65.48 | 4.43 | 5.96 | 51.06 | 78.64 |
| Example 3 | 82.03 | 89.95 | 63.34 | 4.45 | 5.61 | 51.58 | 84.45 |
| Example 4 | 80.71 | 89.78 | 68.68 | 4.43 | 5.81 | 50.86 | 72.57 |
| Example 5 | 84.55 | 90.78 | 69.71 | 4.42 | 5.78 | 50.87 | 71.81 |
| Example 6 | 86.96 | 91.47 | 70.29 | 4.46 | 5.56 | 50.95 | 70.73 |
| Example 7 | 65.71 | 92.18 | 71.27 | 4.43 | 5.42 | 50.81 | 72.35 |
| Example 8 | 88.22 | 80.06 | 67.42 | 4.55 | 6.05 | 51.55 | 76.35 |
| Example 9 | 84.29 | 75.44 | 60.17 | 4.45 | 7.82 | 50.96 | 79.63 |
| Example 10 | 85.97 | 90.56 | 68.98 | 4.42 | 5.53 | 51.23 | 74.46 |
| Example 11 | 85.46 | 89.24 | 65.81 | 4.43 | 5.66 | 51.22 | 76.92 |
| Example 12 | 78.46 | 92.01 | 73.98 | 4.44 | 5.40 | 51.40 | 77.45 |
| Example 13 | 88.97 | 79.42 | 64.21 | 4.45 | 5.89 | 51.20 | 78.76 |
| Example 14 | 67.48 | 90.34 | 71.46 | 4.40 | 5.59 | 50.99 | 70.68 |
| Example 15 | 81.58 | 86.77 | 64.58 | 4.45 | 5.65 | 51.27 | 79.32 |
| Example 16 | 75.46 | 79.89 | 59.77 | 4.52 | 7.11 | 51.27 | 87.07 |
| Example 17 | 74.36 | 77.28 | 56.42 | 4.48 | 7.32 | 51.34 | 88.53 |
| Example 18 | 66.13 | 85.67 | 67.98 | 4.45 | 7.04 | 50.54 | 85.25 |
| Example 19 | 84.81 | 90.69 | 69.38 | 4.47 | 5.67 | 50.53 | 72.21 |
| Example 20 | 82.87 | 88.17 | 63.65 | 4.44 | 5.89 | 50.64 | 81.89 |
| Example 21 | 70.83 | 89.06 | 65.11 | 4.41 | 5.78 | 50.58 | 79.88 |
| Example 22 | 83.49 | 78.31 | 60.16 | 4.43 | 6.13 | 51.15 | 83.36 |
| Example 23 | 79.58 | 88.34 | 66.13 | 4.42 | 5.90 | 50.88 | 75.35 |
| Example 24 | 63.99 | 90.19 | 70.33 | 4.42 | 5.56 | 50.79 | 72.19 |
| Example 25 | 80.05 | 77.48 | 64.42 | 4.45 | 6.89 | 51.04 | 78.76 |
| Example 26 | 87.58 | 78.49 | 66.57 | 4.43 | 6.33 | 50.76 | 78.94 |
| Example 27 | 87.15 | 92.26 | 70.92 | 4.45 | 5.50 | 50.87 | 75.01 |
| Example 28 | 79.32 | 93.27 | 74.93 | 4.42 | 5.41 | 50.89 | 69.21 |
| Example 29 | 86.88 | 76.31 | 65.76 | 4.48 | 6.47 | 51.48 | 79.88 |
| Example 30 | 64.94 | 93.01 | 72.06 | 4.45 | 5.40 | 50.96 | 76.05 |
| Example 31 | 85.33 | 86.37 | 70.73 | 4.46 | 7.70 | 50.66 | 73.46 |
| Example 32 | 65.34 | 92.35 | 71.59 | 4.41 | 5.55 | 50.69 | 71.02 |
| Example 33 | 85.76 | 90.24 | 75.18 | 4.45 | 5.55 | 51.03 | 71.20 |
| Example 34 | 89.42 | 79.09 | 65.43 | 4.48 | 5.85 | 51.27 | 78.53 |
| Example 35 | 76.62 | 92.74 | 74.34 | 4.43 | 5.38 | 51.70 | 78.12 |
| Example 36 | 84.03 | 80.41 | 69.89 | 4.45 | 5.76 | 50.56 | 77.21 |
| Example 37 | 83.69 | 91.41 | 73.79 | 4.46 | 5.60 | 50.63 | 76.45 |
| Example 38 | 79.67 | 91.76 | 72.79 | 4.45 | 5.54 | 50.87 | 71.21 |
| Example 39 | 81.29 | 88.34 | 70.11 | 4.47 | 5.53 | 51.08 | 78.37 |
| Example 40 | 62.46 | 94.37 | 73.07 | 4.46 | 5.40 | 51.10 | 80.29 |
| Example 41 | 82.46 | 88.57 | 65.40 | 4.47 | 5.88 | 51.23 | 78.19 |
| Example 42 | 82.46 | 72.37 | 65.42 | 4.45 | 6.67 | 50.65 | 81.15 |
| Example 43 | 81.58 | 89.72 | 67.94 | 4.43 | 5.60 | 51.26 | 78.65 |
| Example 44 | 79.15 | 89.57 | 70.35 | 4.45 | 5.53 | 51.21 | 80.67 |
| Example 45 | 84.75 | 77.56 | 62.43 | 4.44 | 7.61 | 51.23 | 77.25 |
| Example 46 | 70.49 | 87.35 | 67.60 | 4.20 | 5.83 | 50.75 | 78.72 |
| Example 47 | 83.37 | 68.03 | 55.27 | 4.46 | 8.35 | 51.54 | 85.92 |
| Example 48 | 68.76 | 79.99 | 66.48 | 4.46 | 7.03 | 51.83 | 87.75 |
| Example 49 | 84.38 | 87.16 | 64.55 | 4.44 | 5.86 | 51.26 | 78.21 |
| Example 50 | 87.54 | 92.53 | 71.11 | 4.43 | 5.34 | 50.76 | 69.39 |
| Example 51 | 85.97 | 91.36 | 68.65 | 4.46 | 5.67 | 50.76 | 69.46 |
| Example 52 | 85.23 | 90.57 | 69.55 | 4.46 | 5.56 | 50.56 | 76.23 |
| Example 53 | 82.91 | 87.21 | 67.02 | 4.45 | 5.91 | 50.01 | 75.14 |
| Example 54 | 80.79 | 78.00 | 64.63 | 4.46 | 6.42 | 51.52 | 75.78 |
| Example 55 | 74.92 | 77.06 | 60.55 | 4.46 | 6.54 | 51.88 | 76.45 |
| Example 56 | 77.03 | 74.37 | 61.62 | 4.47 | 6.52 | 55.24 | 79.73 |
| Example 57 | 83.52 | 72.59 | 61.19 | 4.51 | 6.99 | 53.96 | 81.36 |
| Example 58 | 67.05 | 78.32 | 71.08 | 4.47 | 5.60 | 50.97 | 73.27 |
| Comparative Example 1 | 55.81 | 88.16 | 78.49 | 4.43 | 6.36 | 50.64 | 81.98 |
| Comparative Example 2 | 65.27 | 55.13 | 51.5 | 4.69 | 9.88 | 51.63 | 93.70 |
| Comparative Example 3 | 59.34 | 72.52 | 70.12 | 4.52 | 7.07 | 54.35 | 82.43 |

It can be seen from Table 2 that the batteries in Examples 1 to 58 of the present disclosure exhibit more excellent room-temperature cycling performance, high-temperature cycling performance, and high-temperature storage performance as well as lower impedance.

Further, from a comparison between Example 9 and Examples 47 to 48 as well as from a comparison between Example 6, Examples 53 to 54, and Examples 55 to 56, it can be seen that when the mass percentage of the borate ester compound in the electrolyte ranges from 0.1% to 2%, the obtained battery exhibits more excellent overall performance.

From a comparison between Examples 4 to 6 and Examples 7 to 8, a comparison between Examples 9 to 12 and Examples 13 to 15, a comparison between Examples 19, 21, and 23 and Examples 20 and 22, a comparison between Examples 26 to 28 and Examples 29 to 30, a comparison between Examples 31 and 33 and Examples 32, 34, and 35, a comparison between Examples 36 to 38 and Examples 39, 40, and 44, a comparison between Example 9 and Examples 45 to 46, and a comparison between Examples 6 and 53 and Examples 54, 57, and 58, it can be seen that when the mass percentage of the borate ester compound in the electrolyte ranges from 0.1% to 1% and the mass percentage of fluoroethylene carbonate ranges from 5% to 10%, the obtained battery exhibits more excellent overall performance.

From a comparison between Example 6 and Example 50 as well as from a comparison between Example 11 and Example 51, it can be seen that when the electrolyte further includes other additives, the obtained battery exhibits more excellent overall performance.

Finally, it should be noted that each of the above embodiments is used only to illustrate, rather than to limit, the technical solutions of the present disclosure. Although the present disclosure has been described in detail with reference to the foregoing embodiments, it is conceivable for those skilled in the art that modifications can be made to the technical solutions described in the foregoing embodiments, or equivalent replacements can be made to some or all of the technical features in the technical solutions described in the foregoing embodiments. These modifications or equivalent replacements do not depart the essence of corresponding technical solutions from the scope of the technical solutions of the embodiments of the present disclosure.

## Claims

1. An electrolyte, comprising:
fluoroethylene carbonate; and
a borate ester compound.

2. The electrolyte according to claim 1, wherein the borate ester compound has a structural formula represented by any one of Formula 1 to Formula 4: 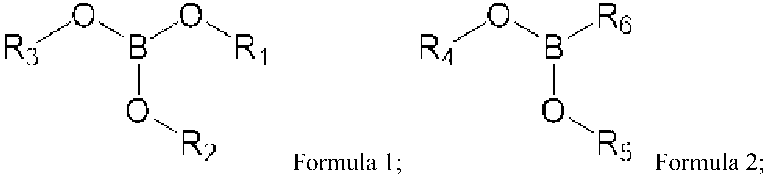 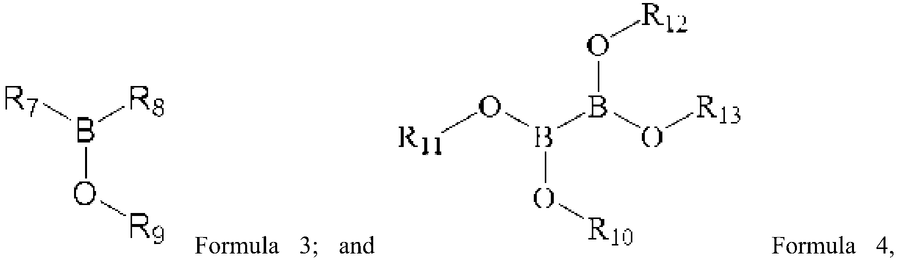 where:
R₁, R₂, R₃, R₆, R₇, R₈, R₉, R₁₀, R₁₁, R₁₂, and R₁₃ in Formula 1 to Formula 4 are each independently selected from substituted or unsubstituted C₁ to C₃₀ alkyl, substituted or unsubstituted C₂ to C₃₀ alkenyl, or substituted or unsubstituted C₁ to C₃₀ silyl; and
R₄ and R₅ in Formula 2 are each independently selected from substituted or unsubstituted C₁ to C₃₀ alkyl, substituted or unsubstituted C₂ to C₃₀ alkenyl, or substituted or unsubstituted C₁ to C₃₀ silyl; and/or R₄ and R₅ in Formula 2 are bonded to form a ring.

3. The electrolyte according to claim 1 or 2, wherein a substituent of R₁, R₂, R₃, R₄, R₅, R₆, R₇, R₈, R₉, R₁₀, R₁₁, R₁₂, and R₁₃ is selected from at least one of substituted or unsubstituted C₁ to C₃₀ alkyl, substituted or unsubstituted C₂ to C₃₀ alkenyl, carbonyl, or halogen.

4. The electrolyte according to any one of claims 1 to 3, wherein the borate ester compound is selected from the following structures: 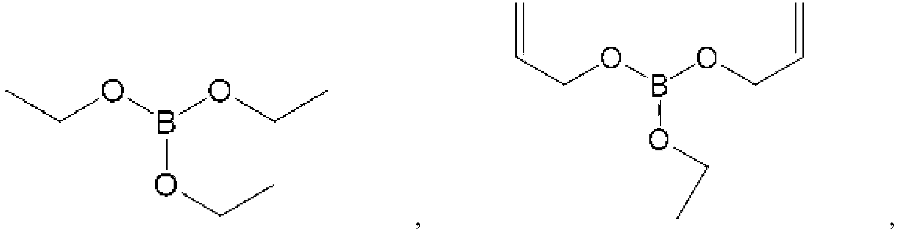 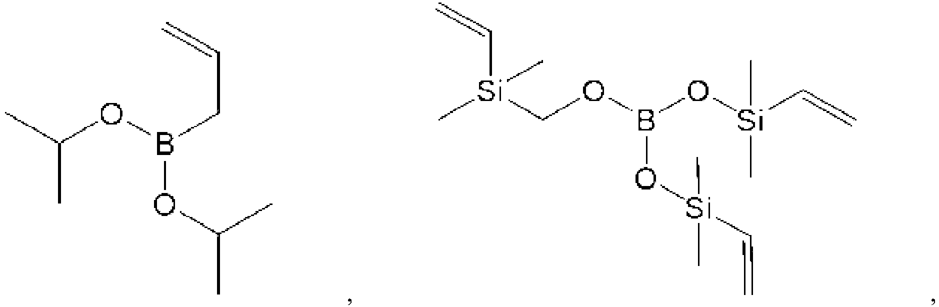 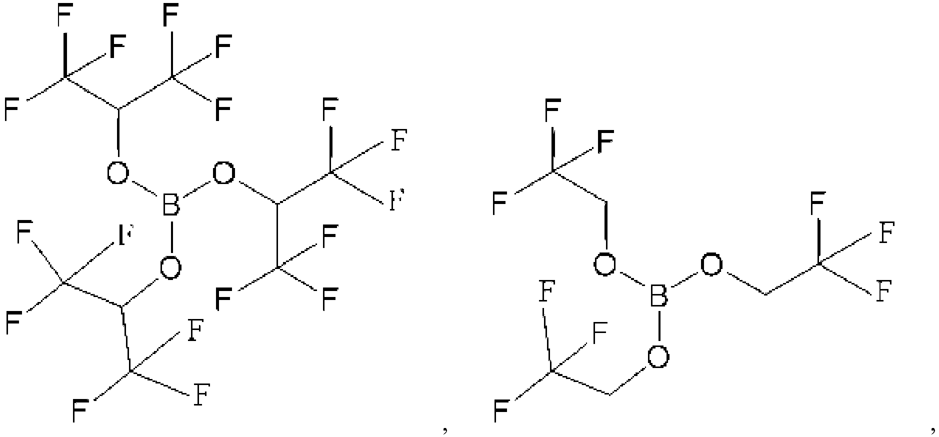 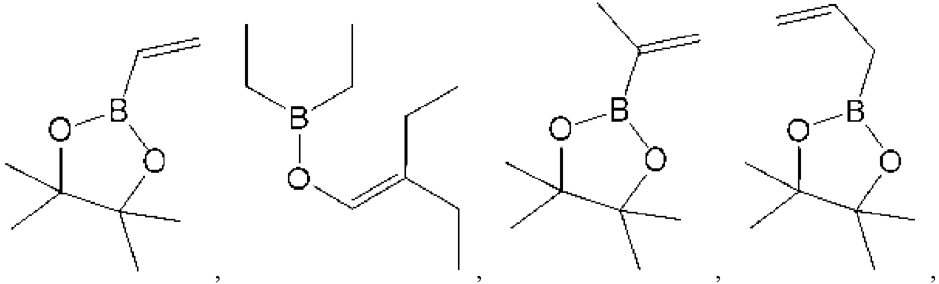 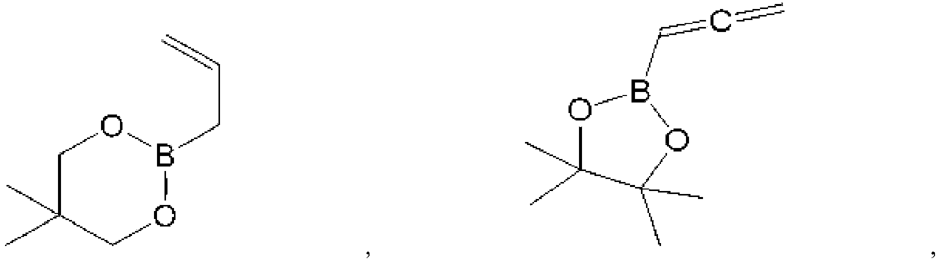 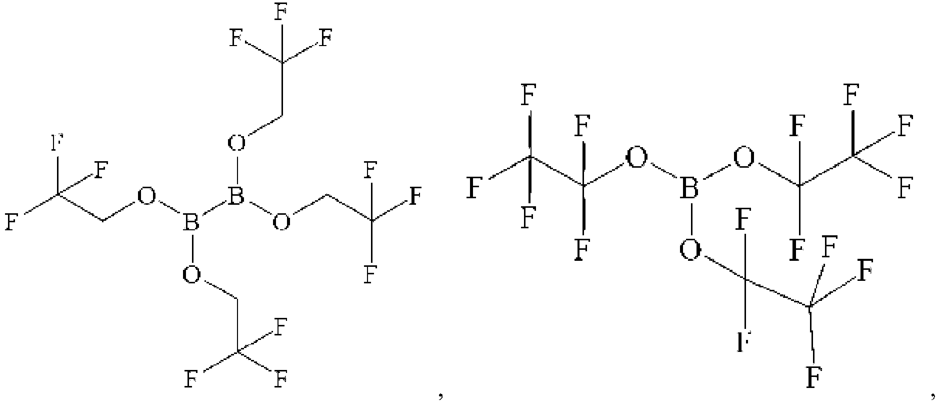 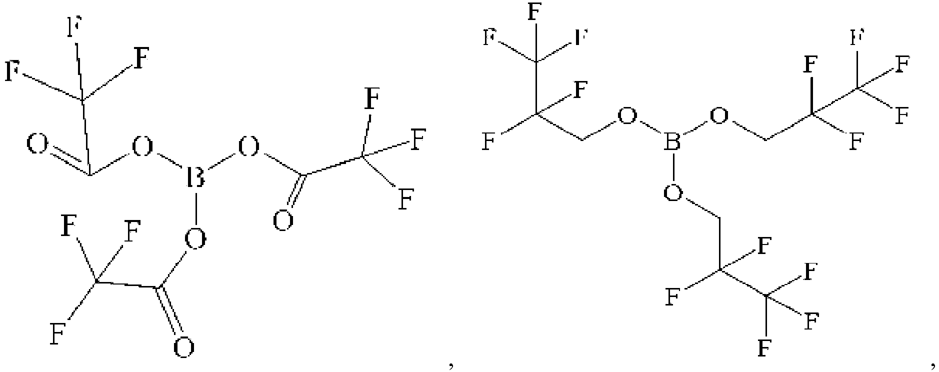 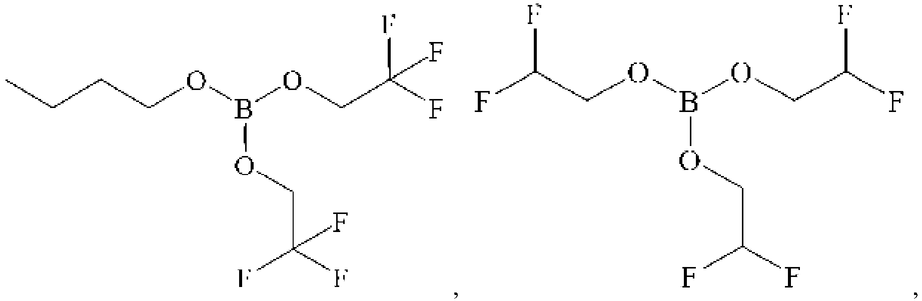 or

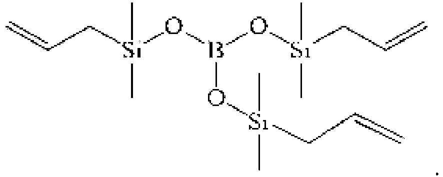

5. The electrolyte according to any one of claims 1 to 4, wherein based on a total mass of the electrolyte, a mass percentage of the borate ester compound ranges from 0.1% to 2%.

6. The electrolyte according to any one of claims 1 to 5, wherein based on a total mass of the electrolyte, a mass percentage of the fluoroethylene carbonate ranges from 1% to 15%.

7. The electrolyte according to claim 5 or 6, wherein based on the total mass of the electrolyte, the mass percentage of the borate ester compound ranges from 0.1% to 1%, and a mass percentage of the fluoroethylene carbonate ranges from 5% to 10%.

8. The electrolyte according to any one of claims 1 to 7, further comprising:
a solvent, wherein based on a total mass of the electrolyte, a mass percentage of the solvent ranges from 10% to 80%; and/or
other additives, wherein based on the total mass of the electrolyte, a mass percentage of the other additives ranges from 0.5% to 5%,
wherein the solvent comprises at least one of propylene carbonate, ethyl methyl carbonate, ethylene carbonate, dimethyl carbonate, diethyl carbonate, fluoroethylene carbonate, γ-butyrolactone, sulfolane, methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, or butyl butyrate, and
wherein the other additives are selected from at least one of vinylene carbonate, vinyl ethylene carbonate, ethylene sulfate, 1,3-propane sultone, 1,3-propene sultone, ethylene sulfite, or tris(trimethylsilyl)borate.

9. The electrolyte according to any one of claims 1 to 8, further comprising:
a lithium salt, wherein based on a total mass of the electrolyte, a mass percentage of the lithium salt ranges from 12% to 18%.

10. A battery, comprising the electrolyte according to any one of claims 1 to 9.
